# EUROPÄISCHE PATENTSCHRIFT

(11) **EP 2 529 510 B1**
(45) Veröffentlichungstag und Bekanntmachung des Hinweises auf die Patenterteilung: **20.06.2018**
(21) Anmeldenummer: 10771087.3
(22) Anmeldetag: 21.10.2010
(51) Int. Cl.: H04L 12/28, H04L 29/08

(54) **STEUERUNG EINES HEIMAUTOMATISIERUNGSSYSTEMS**
CONTROL OF A HOME AUTOMATION SYSTEM
COMMANDE D'UN SYSTÈME D'AUTOMATISATION DOMESTIQUE

(30) Priorität: 25.01.2010 DE 102010005754
(43) Veröffentlichungstag der Anmeldung: 05.12.2012
(73) Patentinhaber: innogy SE, 45128 Essen (DE); EQ-3 AG, 26789 Leer (DE)
(72) Erfinder: DANKE, Enno, 81373 München (DE); GROHMANN, Bernd, 26135 Oldenburg (DE); GRASS, Frank, 26810 Westoverledingen (DE)
(74) Vertreter: Cohausz & Florack
(86) Internationale Anmeldenummer: PCT/EP2010/065882
(87) Internationale Veröffentlichungsnummer: WO 2011/088908

(56) Entgegenhaltungen:
- EP-A1- 1 069 694
- EP-A1- 1 069 695
- EP-A2- 0 626 635
- DE-A1- 19 502 015
- DE-A1-102004 027 893
- US-A1- 2008 188 963
- US-B1- 7 526 539
- CORCORAN P M ET AL: "BROWSER-STYLE INTERFACES TO A HOME AUTOMATION NETWORK", IEEE TRANSACTIONS ON CONSUMER ELECTRONICS, IEEE SERVICE CENTER, NEW YORK, NY, US, vol. 43, no. 4, 1 November 1997 (1997-11-01), pages 1063-1069, XP000768559, ISSN: 0098-3063, DOI: 10.1109/30.642372
- DESBONNET J ET AL: "SYSTEM ARCHITECTURE AND IMPLEMENTATION OF A CEBUS/INTERNET GATEWAY", IEEE TRANSACTIONS ON CONSUMER ELECTRONICS, IEEE SERVICE CENTER, NEW YORK, NY, US, vol. 43, no. 4, 1 November 1997 (1997-11-01), pages 1057-1062, XP000768558, ISSN: 0098-3063, DOI: 10.1109/30.642371

## Beschreibung

Der Gegenstand betrifft einen Sensor zur Steuerung eines Heimautomatisierungsystems mit einem Eingang eingerichtet zum Detektieren von Ereignissen und einem Prozessor eingerichtet zum Auswerten von an dem Eingang detektierten Ereignissen und zum Steuern einer Kommunikationsschnittstelle, derart, dass mittels einer von der Kommunikationsschnittstelle ausgesendeten Aktor-Steuerungs-Nachricht ein Aktor ansteuerbar ist, wobei der Prozessor über die Kommunikationsschnittstelle in Reaktion auf ein detektiertes Ereignis zumindest eine Aktor-Steuerungs-Nachricht an einen Aktor versendet.

Systeme zur Heimautomatisierung sind hinlänglich bekannt. So ist zum Beispiel unter der Bezeichnung EIB/KNX ein kabelgebundenes Heimautomatisierungssystem bekannt, bei dem über einen seriellen Bus Nachrichten zwischen Sensoren und Aktoren ausgetauscht werden und entsprechend vorgebbarer Regeln (Parameter) elektrische Verbraucher gesteuert werden. Ein solches Bussystem erfordert jedoch eine aufwendige Verkabelung, die fast ausschließlich im Neubau realisierbar ist.

Bei der Nachrüstung von Heimautomatisierungslösungen in bestehende Elektroinstallationen eignen sich insbesondere funkbetriebene Lösungen. Hierbei kommunizieren Sensoren und Aktoren sowie zentrale Steuerrechner über Hochfrequenzfunk. Da bei der Nachrüstung jedoch an vielen Stellen, an denen Sensoren oder Aktoren eingesetzt werden, keine Stromversorgung vorhanden ist, sind zumindest energetisch eigengespeiste Sensoren (z.B. mittels Batterien, Kondensatoren, etc.) notwendig. Bei den eigengespeisten Sensoren ist der Stromverbrauch jedoch ein entscheidendes Kriterium für die Dauer des Betriebs des Sensors mit einer einzigen Batterie. Sensoren die ununterbrochen mit Aktoren und zentralen Steuerrechnern kommunizieren oder in regelmäßigen Abständen mit den Aktoren bzw. den zentralen Steuerrechnern kommunizieren, verbrauchen unnötig viel Strom. Daher ist bereits bekannt, die Batterielebensdauer dadurch zu verlängern, dass die Geräte in einen Schlafmodus versetzt werden und nur bei einer Nutzerinteraktion am Gerät in einen Aktivmodus versetzt werden und Nachrichten aussenden und empfangen.

Problematisch bei diesen, nur durch Nutzerinteraktion aktivierbaren Geräten ist jedoch das Umkonfigurieren, insbesondere das Zuordnen von neuen Aktoren (Empfängern) zu Sensoren als auch das Parametrieren der Sensoren und/oder Aktoren. Für die Umkonfiguration von bestehenden Heimautomatisierungssystemen ist es notwendig, dass der Nutzer nach dem Umkonfigurieren eines Gerätes mittels des zentralen Steuerrechners das Gerät innerhalb einer gewissen Zeitspanne betätigt, damit die Konfigurationsänderung an das Gerät übertragen werden kann und das Gerät diese Konfigurationsänderung empfangen kann. Andere Systeme verlangen von dem Benutzer, dass er das Gerät über eine spezielle Interaktion in den Konfigurationsmodus versetzt und beispielsweise mittels eines geeigneten Programmiergeräts die Umkonfiguration vornimmt.

So ist beispielsweise aus der WO 2007/072193 A2 ein Handprogrammiergerät bekannt, welches zum Programmieren eines Sensors mit diesem verbunden wird. Während des gesamten Umprogrammierens und Umkonfigurierens ist das Gerät, welches umprogrammiert wird, aktiv mit dem mobilen Programmiergerät verbunden. Dies ist zeitaufwendig und mühsam, da zum Umprogrammieren der Benutzer jeden einzelnen Sensor bzw. jeden einzelnen Aktor manuell ansprechen muss.

Aus der EP 1 069 695 A1 ist ein System bekannt, bei dem eine Fernbedienung über einen zentralen Controller programmiert werden kann. Hierüber kann die Fernbedienung dann mit verschiedenen Geräten kommunizieren. Problematisch ist dabei jedoch, dass zum Programmieren einerseits und zum Kommunizieren mit den Geräten andererseits unabhängige Nutzerinteraktionen notwendig sind. Hierdurch ist der Energieverbrauch des Fernbedienung erhöht.

Aus diesem Grunde lag dem Gegenstand die Aufgabe zugrunde, ein Verfahren zur vereinfachten Konfigurationsänderung zu schaffen, bei dem die Betriebsdauer eines Sensors bzw. eines Aktors berücksichtigt ist.

Diese Aufgabe wird gegenständlich durch einen Sensor nach Anspruch 1 und ein Verfahren nach Anspruch 13 gelöst.

Es ist erkannt worden, dass nur für den Fall, dass noch keine Aktor-Steuerungs-Nachricht in dem Sensor bzw. dem Prozessor oder Speicher des Sensors konfiguriert ist, eine solche Konfiguration über einen externen Server notwendig ist. Aus diesem Grunde wird, falls keine Aktor-Steuerungs-Nachricht konfiguriert ist, in Reaktion auf ein detektiertes Ereignis über die Kommunikationsschnittstelle eine Konfigurations-Anfrage ausgesendet. Somit wird in einem ersten Schritt nach einem Ereignis des Vorhandenseins einer Aktor-Steuerungs-Nachricht überprüft. Abhängig vom Prüfergebnis wird die Konfigurations-Anfrage im Anschluss daran versendet. Diese Konfigurations-Anfrage wird regelmäßig von einem Server empfangen und in diesem ausgewertet. Auf eine empfangene Konfigurations-Anfrage kann der Server eine Konfigurations-Antwort aussenden, in der Konfigurationsdaten zumindest zum Konfigurieren einer Aktor-Steuerungs-Nachricht in dem Prozessor des entsprechenden Sensors enthalten sind. Diese Konfigurations-Antwort kann in dem Sensor ausgewertet werden.

Auch ist es möglich, dass eine Konfigurations-Anfrage ausgesendet wird, ohne dass ein Aktor-Steuerungs-Nachricht konfiguriert werden muss. Es kann in der Konfigurations-Antwort lediglich ein Geräteparameter enthalten sein, mit dessen Hilfe ein Sensor konfigurierbar ist.

Ein Sensor kann beispielsweise ein Schalter, ein Bewegungsmelder, ein Taster, ein Türkontakt, ein Thermostat, ein Fensterkontakt, ein Bildsensor, ein Helligkeitssensor, ein Temperatursensor, ein Binärsensor, ein Mikrofon, oder eine andere Einrichtung zum Erfassen von Umweltveränderungen sein.

Am Eingang des Sensors kann gegenständlich ein Ereignis detektiert werden. Ein Ereignis kann eine Benutzerinteraktion, beispielsweise das Betätigen eines Schalters oder Tasters, eine Veränderung von Umweltbedingungen, eine Bewegung, ein Öffnen eines Fensters, eine Temperaturänderung oder eine sonstige Veränderung von Umgebungsbedingungen sein.

Beim Detektieren eines Ereignisses kann der Sensor, der bevorzugt ein eigengespeister (akkumulatorbetriebener) Sensor ist, aufwachen und in einen Aktivmodus versetzt werden. Gegenständlich ist es möglich, dass der Sensor im Normalzustand in einem Ruhezustand (Schlafmodus) ist. In diesem Ruhezustand wird lediglich der Eingang auf das Auftreten eines Ereignisses überwacht. Sämtliche weitere Funktionen können entweder deaktiviert oder mit einer minimalen Leistungsaufnahme aufrechterhalten werden. Insbesondere kann die Kommunikation über eine Kommunikationsschnittstelle in diesen Zeiträumen ruhen, so dass weder Signale ausgesendet, noch Signale empfangen werden. Beim Detektieren eines Ereignisses kann der Sensor erwachen (in den Aktivmodus wechseln), derart, dass der Prozessor aktiviert wird und die Kommunikationsschnittstelle zur Kommunikation mit der Außenwelt aktiviert wird.

Der Prozessor kann beispielsweise ein digitaler Signalprozessor (DSP) sein. Auch kann der Prozessor ein Mikrocontroller sein. Der Prozessor kann ein beliebiger Mikroprozessor sein, der zum Einen zum Auswerten von Eingangssignalen und zum Anderen zum Ausgeben von Steuerungssignalen eingerichtet ist.

Die Kommunikationsschnittstelle kann beispielsweise eine Einrichtung zur Kommunikation über ein Drahtlosnetzwerk sein. Auch kann die Kommunikationsschnittstelle über ein drahtgebundenen Netz kommunizieren. Beispielsweise kann eine Kommunikation über LAN, WLAN, Bluetooth oder dergleichen erfolgen. Insbesondere kann die Kommunikationsschnittstelle beispielsweise bei einer Frequenz von 868Mz mit einem Frequenz Shift Key Nachrichten aussenden. Insbesondere sind Datenraten von 10KB/s möglich. Ein Zugriffsprotokoll kann beispielsweise ein CSMA/CA Zugriffsprotokoll sein.

Die Kommunikation mittels der Kommunikationsschnittstelle kann eine bidirektionale Kommunikation auf einem Bus, insbesondere einem Funkbus sein. Die Kommunikationsschnittstelle kann zur Verschlüsselung der übertragenen Daten eingerichtet sein. Insbesondere kann eine symmetrische Verschlüsselung durch die Kommunikationsschnittstelle unterstützt sein. Insbesondere kann eine CCM*-Verschlüsselung unterstützt sein. Insbesondere kann ein authentifiziertes Verschlüsselungsverfahren nach dem IEEE 802.11 Standard verwendet werden. Auch ist ein erweitetes Verschlüsselungsverfahren nach dem Advanced Encryption Standard Counter Mode (AES/CCM) möglich, bei dem ein 16Byte Block Chiffre verwendet wird. Für die symmetrische Verschlüsselung kann es möglich sein, dass jeder Sensor, jeder Aktor und jeder zentrale Steuerrechner (Server) eine Seriennummer aufweist. Auch kann es möglich sein, dass die Seriennummer eines jeden Gerätes in einer Zentrale bekannt ist. Die Kommunikation über die Kommunikationsschnittstelle kann im Multicast als auch im Unicast Modus erfolgen.

Gegenständlich wird vorgeschlagen, dass der Prozessor an dem Eingang detektierte Ereignisse auswertet. Ein solches Ereignis kann, wie bereits erläutert, eine Benutzeraktion sein. Tritt ein Ereignis ein, kann der Prozessor weitere Funktionen aktivieren, somit "aufwecken", und insbesondere die Kommunikationsschnittstelle aktivieren. Im Fall eines Ereignisses kann über den Prozessor eine Aktor-Steuerungs-Nachricht mittels der Kommunikationsschnittstelle ausgesendet werden.

Eine Aktor-Steuerungs-Nachricht kann eine Nachricht sein, die aus einem Nachrichtenkopf, einem Nachrichteninhalt und einer Prüfsumme gebildet ist. Der Nachrichtenkopf kann beispielsweise eine eindeutige Adresse eines adressierten Aktors enthalten. Der Nachrichteninhalt kann beispielsweise Anweisungen enthalten, die den Aktor zur Durchführung bestimmter Aktionen veranlassen. Die Prüfsumme kann dazu verwendet werden, zu überprüfen, ob die Nachricht fehlerfrei übertragen wurde.

Mit Hilfe einer Aktor-Steuerungs-Nachricht ist es somit möglich, einen Aktor anzusprechen und entsprechend anzusteuern.

Ein Aktor kann insbesondere ein Relais, ein Ventil, ein Motor, ein Stellmotor, ein Dimmer, eine Rolladensteuerung, ein Schalter, ein Signalgeber, ein Infrarotsignalgeber, ein akustischer Signalgeber, ein Bedienteil, ein Informationsterminal oder ein sonstiges Gerät zum Durchführen von Schaltvorgängen, Steuervorgängen, Regelvorgängen oder sonstigen Aktionen und/oder zum Ausgeben von Informationen und Zuständen sein.

Um die Kommunikation auf ein Minimum zu reduzieren, insbesondere wenn in dem Sensor noch keine Aktor-Steuerungs-Nachricht konfiguriert ist, wird vorgeschlagen, dass nur, falls keine Aktor-Steuerungs-Nachricht für einen ersten Aktor in dem Sensor (bzw. dessen Prozessorspeicher) konfiguriert ist, der Prozessor in Reaktion auf ein detektiertes Ereignis über die Kommunikationsschnittstelle eine Konfigurations-Anfrage sendet. Da zu Beginn eines Betriebs eines Sensors, nach einem Reset eines Sensors oder nach dem Löschen aller Aktor-Steuerungs-Nachrichten im Sensor, der Sensor bei einem detektierten Ereignis keine Aktor-Steuerungs-Nachricht aussenden kann wird zunächst eine Konfigurations-Anfrage ausgesendet. Mit Hilfe der Konfigurations-Anfrage fragt der Sensor an, ob Konfigurationsdaten vorliegen, mit deren Hilfe beispielsweise eine Aktor-Steuerungs-Nachricht konfigurierbar ist.

Eine Konfigurations-Anfrage kann einen Nachrichtenkopf, einen Nachrichteninhalt und/oder eine Prüfsumme enthalten. In dem Nachrichtenkopf kann beispielsweise der Empfänger der Konfigurations-Anfrage kodiert sein. Auch kann in dem Nachrichtenkopf der Sender, d.h. der aussendende Sensor, identifiziert sein. Der Nachrichteninhalt der Konfigurations-Anfrage kann sich beispielsweise darauf beschränken, dass eine Konfiguration angefragt wird. Dies kann in einem bestimmten Datenwort kodiert sein.

In Reaktion auf eine Konfigurations-Anfrage kann eine Konfigurations-Antwort ausgesendet werden, die wiederum aus einem Nachrichtenkopf, einem Nachrichteninhalt und/oder einer Prüfsumme gebildet sein kann. Im Nachrichtenkopf kann beispielsweise die Adresse des Sensors, welcher die Konfigurations-Anfrage gesendet hat, gespeichert sein, so dass der Sensor erkennen kann, dass die Konfigurations-Antwort, die auf der Konfigurationsschnittstelle empfangen wird, für diesen Sensor geeignet und bestimmt ist. Der Nachrichteninhalt kann Konfigurationsparameter enthalten, die ebenfalls mittels eines Codeworts kodiert sein können.

Die Konfigurations-Antwort kann von einem zentralen Steuerrechner (Server, Smart Home Controller SHC) ausgesendet werden. Dieser kann beispielsweise eine zentrale Steuereinrichtung sein, mit deren Hilfe Parameter für die Konfiguration von Sensoren und Aktoren überarbeitet und ausgesendet werden können. Der Server kann beispielsweise mit einem Weitverkehrsnetz verbunden sein. Hierbei ist es beispielsweise möglich, dass der Server über einen entsprechenden Router mit einem Weitverkehrsnetz, beispielsweise einem TCP/IP basiertes Weitverkehrsnetz verbunden ist. Insbesondere kann es möglich sein, auf den Server über das Weitverkehrsnetz zuzugreifen und aus der Ferne Konfigurationen vorzunehmen. Der Server kann dergestalt sein, dass er lediglich zu Konfigurationszwecken mit Sensoren und Aktoren kommuniziert. Das Heimautomatisierungssystem kann darüber hinaus so ausgelegt sein, dass eine Kommunikation zwischen Sensoren und Aktoren zur Steuerung in Reaktion auf Ereignisse erfolgt, ohne dass der Server zwischengeschaltet ist. Hierdurch lässt sich eine autarke Heimautomatisierung realisieren, die auch ohne einen Server funktioniert.

Gemäß einem vorteilhaften Ausführungsbeispiel wird vorgeschlagen, dass der Prozessor aus der Konfigurations-Antwort zumindest eine Aktor-Identifikation ermittelt und mit Hilfe der ermittelten Aktor-Identifikation eine Aktor-Steuerungs-Nachricht konfiguriert und derart individualisiert, dass diese von dem der Aktor-Identifikation zugeordneten Aktor empfangbar und auswertbar ist.

Es ist erkannt worden, dass mittels der Konfigurations-Antwort der Sensor so konfiguriert werden kann, dass er bestimmte Aktoren mit Informationen in Reaktion auf ein Ereignis versorgen kann, so dass die Aktoren entsprechende Aktionen ausführen. Die eindeutige Aktor-Identifikation kann eine eindeutige Identifizierung sein, welche beispielsweise die oben bereits erwähnte Seriennummer ist. Mit Hilfe der Aktor-Identifikation kann die Aktor-Steuerungs-Nachricht konfiguriert werden. Hierbei kann beispielsweise in dem Nachrichtenkopf die Aktor-Identifikation verwendet werden, so dass ein Aktor, der diese Nachricht empfängt, die in dem Nachrichtenkopf enthaltene Identifikation mit der eigenen Identifikation abgleichen kann und nur bei einer Übereinstimmung die Aktor-Steuerungs-Nachricht weiter verarbeiten kann. Hierdurch ist eine Individualisierung der Aktor-Steuerungs-Nachricht möglich, so dass jede Nachricht eindeutig einem bestimmten Aktor zuordenbar ist und nur von diesem Aktor auswertbar ist. Auch ist es möglich, dass im Nachrichtenkopf mehrere Aktor-Identifikationen verwendet werden, so dass mit einer Nachricht mehrere Aktoren angesprochen werden können.

Gemäß einem vorteilhaften Ausführungsbeispiel wird vorgeschlagen, dass der Prozessor aus der Konfigurations-Antwort zumindest einen Sensor-Parameter ermittelt und mit Hilfe des ermittelten Sensor-Parameters zumindest eine Aktor-Steuerungs-Nachricht konfigurierbar ist. Der Sensor-Parameter kann beispielsweise Informationen darüber enthalten, wie ein Aktor angesteuert werden muss und welche Aktionen ein Aktor ausführen muss, sobald er eine Aktor-Steuerungs-Nachricht erhält. Ein Sensor-Parameter kann darüber hinaus weitere Regeln zum Ansteuern eines Aktors enthalten, die abhängig von dem Ereignis abgearbeitet werden können und entsprechende Aktor-Steuerungs-Nachrichten auslösen können. So ist es beispielsweise möglich, dass anhand der Sensor-Parameter festgelegt werden kann, dass bei einem Ereignis abhängig von einer Bedingung A eine erste Aktor-Steuerungs-Nachricht ausgesendet wird und wenn nicht Bedingung A sondern Bedingung B erfüllt ist, eine zweite, andere Aktor-Steuerungs-Nachricht ausgesendet wird. Die Sensor-Parameter ermöglichen so, verschiedene Aktor-Steuerungs-Nachrichten zu konfigurieren als auch den Prozessor innerhalb des Sensors derart zu konfigurieren, dass der Prozessor Regeln befolgt, anhand derer bestimmte Ereignisse abhängig von weiteren Bedingungen, zu eindeutigen Aktor-Steuerungs-Nachrichten führen. Auch können die Sensor-Parameter frei von Informationen zu einer Aktor-Steuerungs-Nachricht sein, so dass anhand der Sensor-Parameter nicht zwingend eine Aktor-Steuerungs-Nachricht konfigurierbar ist. Somit ist es auch möglich, mit Hilfe einer Konfigurations-Antwort andere Einstellungen des Sensors als nur die Aktor-Steuerungs-Nachricht mit Hilfe der Parameter zu konfigurieren.

Gemäß einem vorteilhaften Ausführungsbeispiel wird vorgeschlagen, dass der Sensor energetisch eigengespeist ist. Eine energetische Eigenspeisung kann z.B. entweder über eine Batterie oder über einen Kondensator erfolgen. Solche Akkumulatoren können beispielsweise einmalig mit Energie geladen werden, welche dann für einen längeren Zeitraum ausreicht, um den Sensor zu betreiben. Auch ist es möglich, solche Akkumulatoren über Funk mit Energie zu versorgen.

Gemäß einem vorteilhaften Ausführungsbeispiel wird vorgeschlagen, dass der Prozessor den Empfang einer Aktor-Bestätigungs-Nachricht in Reaktion auf das Aussenden einer Aktor-Steuerungs-Nachricht an der Kommunikationsschnittstelle überwacht. Hierdurch kann sichergestellt werden, dass, nachdem eine Aktor-Steuerungs-Nachricht ausgesendet wurde, diese auch von einem hierfür bestimmten Aktor empfangen wurde. Somit kann der Sensor sicherstellen, dass die in der Aktor-Steuerungs-Nachricht kodierte Aktion des Aktors auch aktorseitig empfangen und ggf. ausgeführt wird.

Gemäß einem vorteilhaften Ausführungsbeispiel wird vorgeschlagen, dass der Prozessor bei einem Ausbleiben der Aktor-Bestätigungs-Nachricht und/oder bei einem Empfang einer Aktor-Fehler-Nachricht über die Kommunikationsschnittstelle erneut eine Konfigurations-Anfrage aussendet. Unterbleibt die Aktor-Bestätigungs-Nachricht, so kann sensorseitig nicht ausgeschlossen werden, dass der angesprochene Aktor sich nicht mehr in dem Heimautomatisierungssystem befindet oder defekt ist. Um in diesem Fall eventuell neue Konfigurationsparameter zu empfangen, wird vorgeschlagen, dass eine Konfigurations-Anfrage hieraufhin ausgesendet wird. Auch kann eine Aktor-Fehler-Nachricht dazu führen, dass eine Konfigurations-Anfrage ausgesendet wird, da, nachdem eine Aktor-Fehler-Nachricht empfangen wurde, davon ausgegangen werden kann, dass der Empfänger der Aktor-Steuerungs-Nachricht diese nicht verarbeiten konnte, was beispielsweise an einer fehlerhaften Konfiguration der Sensor-Parameter, der Aktor-Parameter oder der Aktor-Steuerungs-Nachricht liegen kann.

Empfängt der Sensor beispielsweise eine Sensor-Parameter-Änderungsmitteilung oder eine Verknüpfungs-Änderungsmitteilung in einer Aktor -Bestätigungsnachricht oder reagiert der Aktor nicht, und der Sensor gerät in ein Time-Out, so sind verschiedene Szenarien möglich.

Zum Einen ist es möglich, dass der Sensor gemäß seiner Sensor-Parameter die Abarbeitung der Regeln fortsetzt. Das kann bedeuten, dass der Sensor vorzugsweise alle Aktor-Steuerungs-Nachrichten, die dem entsprechenden Ereignis zugeordnet sind und noch nicht abgearbeitet sind, abarbeitet, unabhängig davon, ob die zuvor angesprochenen Aktoren in den Aktor-Bestätigungs-Nachrichten Sensor-Parameter-Änderungsmitteilungen, Verknüpfungs-Änderungsmitteilungen übermitteln oder gar nicht antworten. Im Anschluss an das Abarbeiten der gemäß der Parameter konfigurierten Aktor-Steuerungs-Nachrichten kann der Sensor dann eine Konfigurations-Anfrage an den Server aussenden.

Zum Anderen ist es möglich, dass der Sensor, sobald er in ein Time-Out gerät oder in einer Aktor-Bestätigungs-Nachricht eine Verknüpfungs-Änderungsmitteilung oder eine Parameter-Änderungsmitteilen erhält, das Abarbeiten der Regeln abbricht und unmittelbar daran anschließend eine Konfigurations-Anfrage an den Server aussendet.

Beim Empfang einer Konfigurations-Antwort, die auf eine oben beschriebene Konfigurations-Anfrage empfangen wird, kann der Sensor auf vier verschiedene Weisen reagieren.

Zum Einen ist es möglich, dass der Sensor die in der Konfigurations-Antwort enthaltenen Informationen auswertet und neue Sensor-Parameter, neue Verknüpfungen und/oder neue Aktor-Steuerungs-Nachrichten erstellt und vorzugsweise diese komplett ausführt. Gegebenenfalls ist es möglich, dass die Ausführung nach Abschluss gegenüber dem Server bestätigt wird. Hierbei ist es möglich, dass die Regeln komplett neu ausgeführt werden, oder die Ausführung der Regeln mit Hilfe der neuen Konfigurationen fortgesetzt wird.

Auch ist es möglich, dass zunächst überprüft wird, welche Parameter sich verändert haben, und nur für geänderte Parameter neue Aktor-Steuerungs-Nachrichten auszusenden und für diejenigen Aktor-Steuerungs-Nachrichten, die nicht geändert wurden, nichts zu tun, solange diese bereits ausgesendet worden sind. Im Anschluss daran kann ebenfalls eine Bestätigung ausgesendet werden.

Auch ist es auch möglich, dass der empfangende Sensor zunächst kein weiteres Kommando ausführt. Die neue Konfiguration wird erst bei dem nächsten detektierten Ereignis wirksam.

Für den Fall, dass der Sensor das Kommando mit der neuen Konfiguration erst bei der nächsten Interaktion ausführt, kann die Zentrale die nicht ausgeführten Konfigurationsteile anstelle des Sensors ausführen. Damit ist sichergestellt, dass das gewünschte Verhalten bereits bei der ersten Interaktion nach Umkonfiguration eines Senders ausgeführt wird.

Gemäß einem vorteilhaften Ausführungsbeispiel wird vorgeschlagen, dass der Prozessor eine empfangene Aktor-Bestätigungs-Nachricht auswertet und aus der Aktor-Bestätigungs-Nachricht eine Verknüpfungs-Änderungsmitteilung ermittelt. Es ist erkannt worden, dass Änderungen an Verknüpfungen zwischen Sensor und Aktor, die insbesondere durch die Aktor-Steuerungs-Nachricht und die darin konfigurierte Aktor-Identifikation festgelegt ist, auch geändert werden kann, ohne dass während des Änderungsvorgangs der Sensor hiervon Kenntnis erlangen muss. Somit können Änderungen an Konfigurationen vorgenommen werden, ohne dass der Sensor während der Umkonfiguration aktiv in die Kommunikation eingebunden wird.

Auch ist es möglich, dass die Verknüpfungs-Änderungsmitteilung neben der Information über die vollendete Verknüpfung auch Informationen zu veränderten Sensor-Parametern enthält. Somit ist es möglich, einen Sensor auch hinsichtlich seiner Sensor-Parameter bereits mit Hilfe einer Verknüpfungs-Änderungsmitteilung zu konfigurieren. Insbesondere ist es möglich, eine Aktor-Steuerungs-Nachricht mit Hilfe der in der Verknüpfungs-Änderungs-Mitteilung enthalten Sensor-Parameterzu konfigurieren. Somit kann ein Aktor, beispielsweise per Delegation, dem Sensor nicht nur veränderte Verknüpfungen mitteilen, sondern auch veränderte Sensor-Parameter, mit deren Hilfe unter anderem Aktor-Steuerungs-Nachrichten konfigurierbar sind.

So kann beispielsweise mittels des Servers ein Aktor darüber informiert werden, dass eine bestimmte Sensor-Aktor-Verknüpfung aufgelöst wurde. Bevorzugt wird diese Mitteilung an einen Aktor gemacht, der mit dem betroffenen Sensor ebenfalls kommuniziert. Eine solche Kommunikationsbeziehung ist anhand der Verknüpfungsbeziehungen zwischen Aktoren und Sensoren, die im Server gespeichert sein können, bekannt.

Das bedeutet, dass der Server beim Entfernen einer bestimmten Verknüpfung zwischen einem ersten Aktor und einem ersten Sensor einem zweiten Aktor, der ebenfalls mit dem ersten Sensor kommuniziert, diese Änderung mitteilen kann. Wenn der erste Sensor dann aufgrund des Ereignisses einen Kommunikationsprozess aufnimmt und eine Aktor-Steuerungs-Nachricht an den ersten Aktor aussendet, so kann diese Aktor-Steuerungs-Nachricht von dem ersten Aktor nicht mehr empfangen werden. Jedoch erhält auch der zweite Aktor eine Aktor-Steuerungs-Nachricht von dem ersten Sensor. In dem verbleibenden zweiten Aktor ist zu diesem Zeitpunkt bereits bekannt, dass die Verknüpfung des ersten Sensors mit dem ersten Aktor aufgehoben wurde. In der Aktor-Bestätigungs-Nachricht des zweiten Aktors kann der zweite Aktor die Verknüpfungs-Änderungs-Mitteilung an den betroffenen Sensor übermitteln und der betroffene Sensor kann daraufhin umkonfiguriert werden, so dass er bei einem erneuten Ereignis den entfernten ersten Aktor nicht mehr mit einer Aktor-Steuerungs-Nachricht anspricht.

Sobald der Prozessor einer Verknüpfungs-Änderungs-Mitteilung empfängt, kann gemäß einem vorteilhaften Ausführungsbeispiel eine Konfigurations-Anfrage ausgesendet werden. Dies kann dazu verwendet werden, um sicherzustellen, dass die Verknüpfungs-Änderungs-Mitteilung die aktuelle Verknüpfungs-Änderungs-Mitteilung ist. Insbesondere, wenn eine Verknüpfung zwischen einem Sensor und einem Aktor aufgelöst wird und diese Verknüpfungsauflösung im Rahmen einer Verknüpfungs-Änderungs-Mitteilung dem Sensor mitgeteilt wurde, kann der Sensor nicht wissen, ob dies der aktuelle Status der Verknüpfung ist oder ob weitere Änderungen vorgenommen wurden. Um den Sensor auf den aktuellen Stand der Sensor-Aktor-Verknüpfungen zu bringen, wird daher vorgeschlagen, dass dieser eine Konfigurations-Anfrage in Reaktion auf den Empfang einer Verknüpfungs-Änderungs-Mitteilung aussendet.

Gemäß einem vorteilhaften Ausführungsbeispiel wird auch vorgeschlagen, dass der Prozessor eine empfangene Aktor-Bestätigungs-Nachricht auswertet, und aus der Aktor-Bestätigungs-Nachricht eine Sensor-Parameter-Änderungsmitteilung ermittelt. Wie bereits oben erläutert, kann der Sensor mittels Sensorparametern konfiguriert werden. Hierbei können Regeln als auch Aktor-Steuerungs-Nachrichten anhand der Parameter konfiguriert und individualisiert werden. Werden nun anhand des zentralen Servers Änderungen an den Sensor-Parametern vorgenommen, müssen diese nicht unmittelbar an den Sensor gesendet werden. Dies führte nur dazu, dass der Sensor in Abständen mit dem Server Kontakt aufnehmen müsste, um den aktuellen Status der Parameter abzufragen. Dies führte zu einem erhöhten Energieverbrauch des Sensors.

Anhand der Sensor-Parameter-Änderungsmitteilung, welche der Sensor von dem Aktor wie in der Aktor-Bestätigungs-Nachricht empfängt, kann der Sensor darauf schließen, dass sich seine Konfiguration geändert hat. Hierbei kann die Sensor-Parameter-Änderungsmitteilung lediglich eine Information darüber enthalten, dass sich Sensor-Parameter geändert haben. In diesem Fall kann der Sensor unmittelbar nach Empfang der Sensor-Parameter-Änderungsmitteilung eine Konfigurationsanfrage aussenden, um eine aktualisierte Konfiguration von dem Server zu erfragen.

Um diesen Energieverbrauch zu verhindern, kann gemäß eines vorteilhaften Ausführungsbeispiels bei einer Änderung der Sensor-Parameter diese Änderung zunächst an einen Aktor, der mit dem entsprechenden Sensor kommuniziert, übermittelt werden. In dem Aktor kann die Änderung der Sensor-Parameter gespeichert werden und sobald der Sensor eine Aktor-Steuerungs-Nachricht an den entsprechenden Aktor sendet, kann die Änderung der Sensor-Parameter im Rahmen der Aktor-Bestätigungs-Nachricht an den Sensor zurückgesendet werden.

Auch kann der Aktor nur die Information speichern, dass es Sensor-Parameter-Änderungen gegeben hat. Dann kann dieser Hinweis in der Aktor-Bestätigungs-Nachricht von dem Sensor so verwendet werden, dass der Sensor an den Server eine neue Konfigurations-Abfrage sendet.

Dies führt dazu, dass sobald der Sensor eine Aktion ausführen möchte und diese Aktion mittels einer Aktor-Steuerungs-Nachricht auslöst, der Sensor über die Änderung der Parameter informiert wird. Dann kann es beispielsweise möglich sein, dass der Sensor keine neue Aktor-Steuerungs-Nachricht aussendet, sondern lediglich seine Parameter neu konfiguriert und die Aktor-Steuerungs-Nachrichten abändert, da der Aktor, der die Sensor-Parameter-Änderungsmitteilung übermittelt hat, bereits entsprechend der geänderten Sensor-Parameter agiert. Dies führt auch zu einer Verringerung des Kommunikationsverkehrs.

Gemäß einem vorteilhaften Ausführungsbeispiel wird vorgeschlagen, dass der Prozessor aus der Sensor-Parameter-Änderungsmitteilung zumindest ein Sensor-Parameter ermittelt und mit Hilfe des ermittelten Sensor-Parameters zumindest eine Aktor-Steuerungs-Nachricht konfigurierbar ist. Somit kann der Sensor, nachdem er einen Aktor mittels einer Aktor-Steuerungs-Nachricht aktiviert hat, von dem Aktor selbst einen geänderten Parameter empfangen und seine Aktor-Steuerungs-Nachrichten entsprechend konfigurieren, so dass bei dem nächsten Ereignis die umkonfigurierten Sensor-Parameter berücksichtigt werden.

Gemäß einem vorteilhaften Ausführungsbeispiel wird vorgeschlagen, dass der Prozessor die Konfigurations-Anfrage derart individualisiert, dass diese von genau einem zentralen Server empfangen und ausgewertet wird. Hierdurch wird sichergestellt, dass eine feste Verbindung zwischen Sensoren und zentralen Servern bestehen, so dass ein Sensor nur mit einem ganz bestimmten zentralen Server kommunizieren kann. Dies stellt sicher, dass kein Dritter Eingriff in das Heimautomatisierungssystem hat, in dem er beispielsweise mittels eines weiteren Servers versucht, Sensoren zu manipulieren.

Auch beschrieben ist ein Aktor zur Steuerung eines Heimautomatisierungssystems mit einem Ausgang eingerichtet zum Steuern von Verbrauchern, einem Prozessor eingerichtet zum Steuern des Ausgangs und zum Steuern der Kommunikationsschnittstelle derart, dass von der Kommunikationsschnittstelle eine Aktor-Steuerungs-Nachricht von einem Sensor empfangbar ist, wobei der Prozessor über die Kommunikationsschnittstelle in Reaktion auf eine Aktor-Steuerungs-Nachricht zumindest eine Aktor-Bestätigungs-Nachricht an den Sensor sendet. Um die Kommunikation zwischen Sensor und Aktor bzw. Sensor und Server auf ein Minimum zu reduzieren, wird vorgeschlagen, dass, falls der Aktor von einem Server eine Verknüpfungs-Änderungsmitteilung eine Sensor-Parameter-Änderungsmitteilung und/oder eine Sensor-Parameter-Änderungsmitteilung empfangen hat, der Prozessor über die Kommunikationsschnittstelle zusammen mit der Aktor-Bestätigungs-Nachricht die Verknüpfungs-Änderungsmitteilung oder die Sensor-Parameter-Änderungsmitteilung an den Sensor aussendet. Das bedeutet, dass Änderungen an Verknüpfungen zwischen Sensoren und Aktoren als auch Änderungen an Sensorparametern zunächst dem Aktor mitgeteilt werden und der Aktor den Sensor nur dann darüber informiert, wenn der Sensor aufgrund eines Ereignisses ohnehin aktiviert wurde und eine Aktor-Steuerungs-Nachricht bereits ausgesendet hat. Da der Sensor nach dem Aussenden einer Aktor-Steuerungs-Nachricht ohnehin auf eine Aktor-Bestätigungs-Nachricht wartet, kann in Rahmen der Aktor-Bestätigungs-Nachricht die Verknüpfungs-Änderungsmitteilung oder die Sensor-Parameter-Änderungsmitteilung an den Sensor übertragen werden, ohne dass der Sensor zusätzliche Energie verbraucht.

Gemäß einem vorteilhaften Ausführungsbeispiel wird ein Verfahren zur Steuerung eines Heimautomatisierungssystems mit den Schritten sensorseitiges Detektieren eines Ereignisses, sensorseitiges Aussenden einer Aktor-Steuerungs-Nachricht zum Ansteuern eines Aktors in Reaktion auf ein detektiertes Ereignis vorgeschlagen. Zur Reduktion des Energieverbrauchs des Sensors wird vorgeschlagen, dass, falls in dem Sensor kein Aktor als Empfänger einer Aktor-Steuerungs-Nachricht konfiguriert ist, sensorseitig eine Konfigurations-Anfrage in Reaktion auf ein detektiertes Ereignis ausgesendet wird und sensorseitig eine empfangene Konfigurations-Antwort ausgewertet wird. Das bedeutet, dass sobald eine Aktor-Steuerungs-Nachricht in dem Sensor konfiguriert ist, eine Konfigurations-Anfrage in Reaktion auf ein Ereignis ausbleiben kann. Die Änderungen an den Sensor-Parametern als auch an den Verknüpfungen zwischen Sensoren und Aktoren werden dem Sensor im Anschluss im Rahmen von Aktor-Bestätigungs-Nachrichten von den Aktoren mitgeteilt. Somit reduziert sich die Kommunikation zwischen dem Sensor und dem Server zunächst darauf, dass der Sensor bei dem Server nur dann anfragt, wenn er noch nicht konfiguriert ist. Sobald der Sensor konfiguriert ist, kann, abhängig von bestimmten Randbedingungen, auf eine weitere Kommunikation zwischen dem Sensor und dem Server verzichtet werden. Nur wenn bestimmte Ereignisse eintreten, wie beispielsweise das Ausbleiben einer Aktor-Bestätigungs-Nachricht, kann erneut eine Kommunikation zwischen Sensor und Server aufgenommen werden.

Auch beschrieben ist ein Verfahren zur Steuerung eines Heimautomatisierungssystems mit den Schritten aktorseitiges Empfangen einer Aktor-Steuerungs-Nachricht, aktorseitiges Aussenden einer Aktor-Bestätigungs-Nachricht an einen Sensor in Reaktion auf eine empfangene Aktor-Steuerungs-Nachricht. Um den Sensor bei Minimierung des Kommunikationsaufwandes über Änderungen zu informieren, wird vorgeschlagen, dass, falls der Aktor von einem Server eine Verknüpfungs-Änderungsmitteilung, einen Sensor-Parameter und/oder eine Sensor-Parameter-Änderungsmitteilung empfangen hat, aktorseitig zusammen mit der Aktor-Bestätigungs-Nachricht die Verknüpfungs-Änderungsmitteilung oder eine Sensor-Parameter-Änderungsmitteilung versendet. Dies stellt sicher, dass der Sensor ohne eine zusätzliche Kommunikation mit dem Server über Verknüpfungsänderungen als auch über Änderungen der Sensor-Parameter informiert bleibt.

Die zuvor genannten Verfahren können auch als Computerprogramm oder als auf einem Speichermedium gespeichertes Computerprogramm realisiert werden. Hierbei kann sensorseitig, aktorseitig und/oder serverseitig ein Mikroprozessor zur Durchführung der jeweiligen Verfahrensschritte durch ein Computerprogramm geeignet programmiert sein. Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: ein schematisches Bild eines Sensors;
- Fig. 2: ein schematisches Bild eines Aktors;
- Fig. 3: ein schematisches Bild eines Automatisierungssystems;
- Fig. 4: eine Datenstruktur einer Konfigurations-Anfrage;
- Fig. 5: eine Datenstruktur einer Konfigurations-Antwort;
- Fig. 6: eine Datenstruktur einer Aktor-Steuerungs-Nachricht;
- Fig. 7: eine Datenstruktur einer Aktor-Bestätigungs-Nachricht;
- Fig. 8: ein Nachrichtendiagramm bei einem umkonfigurierten Sensor;
- Fig. 9: ein Nachrichtendiagramm für eine Verknüpfung zwischen einem Sensor und einem Aktor;
- Fig. 10: ein Nachrichtendiagramm bei der Entfernung einer Verknüpfung zwischen einem Sensor und einem Aktor;
- Fig. 11: ein Nachrichtendiagramm beim Entfernen einer Verknüpfung zwischen einem Sensor und einem Aktor und beim Erzeugen einer neuen Verknüpfung zwischen einem Sensor und einem Aktor;
- Fig. 12: ein Nachrichtendiagramm bei der Änderung eines Sensor-Parameters;
- Fig. 13: ein Nachrichtendiagramm bei der Änderung eines Aktor-Parameters.

### Bei der beschriebenen Lösung eines

Heimautomatisierungssystems ist es möglich, einen Sensor hinsichtlich seiner Verknüpfungen mit Aktoren als auch seiner Sensor-Parameter umzuprogrammieren, ohne dass der Sensor während der Zeit des benutzerseitigen Umprogrammierung in einem aktiven Kommunikationsverhältnis mit dem Server bzw. einem Aktor steht. Änderungen an der Konfiguration des Sensors, insbesondere an den Sensor-Parametern als auch an den Verknüpfungen zwischen dem Sensor und Aktoren, können dem Sensor gemäß des Gegenstands mitgeteilt werden, sobald eine Nutzerinteraktion den Sensor ohnehin in einen Aktivmodus versetzt. Beispielsweise ist es möglich, neue Verknüpfungen zwischen einem Sensor und einem Aktor zu konfigurieren. Auch können bestehende Verknüpfungen zwischen einem Sensor und einem Aktor entfernt werden. Schließlich können die Parameter des Sensors geändert werden, als auch die Parameter des Aktors.

Eine Verknüpfung zwischen einem Sensor und einem Aktor kann dahingehend verstanden werden, dass in dem Sensor für einen bestimmen Aktor eine individualisierte Aktor-Steuerungs-Nachricht konfiguriert ist. Das heißt, dass der Sensor bei dem Eintreffen eines Ereignisses an den verknüpften Aktor eine Aktor-Steuerungs-Nachricht übermittelt.

Sensor-Parameter als auch Aktor-Parameter können Regeln sein, die Reaktionen des Sensors auf ein Ereignis als auch die Reaktionen eines Aktors auf dem Empfang einer Aktor-Steuerungs-Nachricht bestimmen.

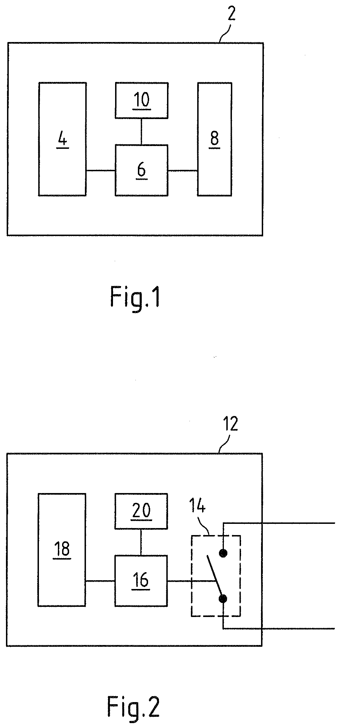

Fig. 1 zeigt schematisch einen Sensor 2 mit einem Tasterfeld 4, welches als Eingang zum Detektieren von Ereignissen verwendet wird. In dem Sensor 2 ist darüber hinaus ein Prozessor 6 angeordnet, zum Auswerten der detektierten Ereignisse an dem Tasterfeld 4. In dem Sensor 2 ist auch eine Funkschnittstelle 8 vorgesehen, welche über den Prozessor 6 angesteuert wird. Mittels der Funkschnittstelle 8 ist es möglich, über ein Funkprotokoll Nachrichten auszusenden und zu empfangen. Die Funkschnittstelle 8 ermöglicht eine Kommunikation über eine Luftschnittstelle. Ferner ist in dem Sensor 2 ein Speicher 10 angeordnet. In dem Speicher 10 können Sensor-Parameter als auch Aktor-Steuerungs-Nachrichten gespeichert werden. Mit Hilfe des Sensors 2 ist es möglich, Ereignisse zu erfassen und in entsprechende Nachrichten umzusetzen.

Fig. 2 zeigt einen Aktor 12. Der Aktor 12 weist einen Ausgang 14 auf, über den beispielsweise elektrische Verbraucher gesteuert werden können. Zu erkennen ist, dass in dem dargestellten Beispiel der Ausgang 14 mit einem Schalter verbunden ist, über den elektrische Kontakte am Ausgang 14 kurz geschlossen oder getrennt werden können. Der Ausgang 14 bzw. der Schalter wird über einen Prozessor 16 angesteuert, der ebenfalls in dem Aktor 12 angeordnet ist. Der Prozessor 16 ist mit einer Funkschnittstelle 18 verbunden. Über die Funkschnittstelle 18 können Daten über die Luftschnittstelle beispielsweise mit der Funkschnittstelle 8 als auch mit einem zentralen Server ausgetauscht werden.

Schließlich ist in dem Aktor 12 ein Speicher 20 angeordnet, in dem Verknüpfungen des Aktors 12 mit Sensoren 2, Sensor-Parameter, Aktor-Parameter, Änderungsmitteilungen und dergleichen gespeichert sein können.

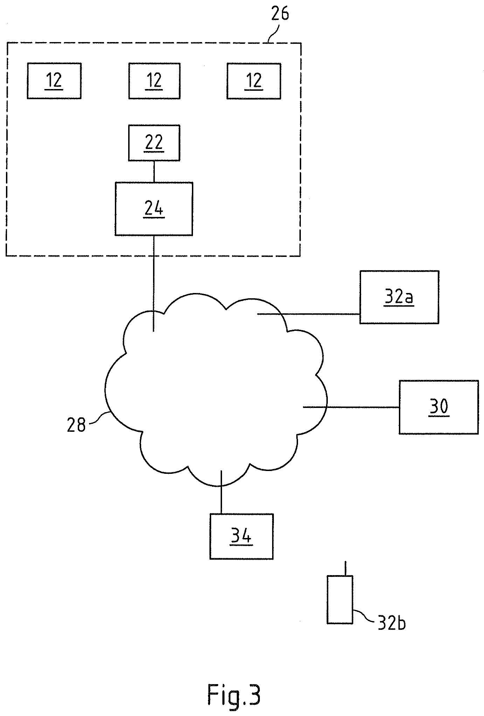

Die in Fig. 1 und 2 gezeigten Sensoren 2 und Aktoren 12 lassen sich in einem in Fig. 3 gezeigten Heimautomatisierungssystem einsetzen. Fig. 3 zeigt beispielsweise die Umgebung 26 eines Hauses oder einer Wohnung. In dieser Umgebung 26 ist ein Router 24 vorgesehen, der eine Kommunikationsverbindung mit dem Internet 28 zur Verfügung stellt und Datenpakete in das Internet 28 aussenden und aus dem Internet 28 empfangen kann. An den Router 24 ist ein Server 22 (Smart Home Controller SHC) angeschlossen. Über den Router 24 kann der SHC 22 Datenpakete mit dem Internet 28 austauschen. Der SHC 22 kann über eine Funkverbindung eine Kommunikation mit den Sensoren 2 als auch den Aktoren 12 aufbauen. Die Kommunikation kann bidirektional sein und auf Anforderungen erfolgen.

An das Internet 28 ist eine zentrale Verwaltungseinheit 30 angeschlossen. Die zentrale Verwaltungseinheit 30 kann über das Internet 28 und den Router 24 eine Kommunikation mit dem SHC 22 aufnehmen, um beispielsweise eine Konfiguration der Sensoren 2, der Aktoren 12 oder des SHCs 22 vorzunehmen.

Die Konfiguration des SHCs 22 als auch der Sensoren 2 und der Aktoren 12 über das Internet 28 kann beispielweise von einem privaten Personalcomputer 32a erfolgen. Hierzu kann der Personalcomputer 32a beispielsweise eine Verbindung über das Internet 28 mit der zentralen Verwaltungseinheit 30 aufbauen und mittels der zentralen Verwaltungseinheit 30 eine Konfiguration des SHCs 22, des Sensors 2 oder des Aktors 12 vornehmen. Diese Konfigurationsänderung kann dann über das Internet 28 von der zentralen Verwaltungseinheit 30 über den Router 24 zu dem SHC 22 übermittelt werden. Auch kann eine Konfiguration beispielsweise über ein Mobiltelefon 32b erfolgen, wobei das Mobiltelefon 32b über ein Gateway 34 mit dem Internet 28 verbunden ist und über das Gateway 34 eine Verbindung mit der zentralen Verwaltungseinheit 30 aufnehmen kann.

Eine sichere Kommunikation zwischen dem SHC 22 und der zentralen Verwaltungseinheit 30 kann beispielsweise dadurch gewährleistet sein, dass der SHC 22 mittels des Routers 24 einen Kommunikationstunnel durch das Internet 28 mit der zentralen Verwaltungseinheit 30 aufbaut, sobald der SHC 22 mit dem Router 24 verbunden wird. Hierzu muss der SHC 22 lediglich die feste IP-Adresse der zentralen Verwaltungseinheit 30 kennen und mittels eines Kennworts und eines Schlüssels die Kommunikation mit der zentralen Verwaltungseinheit 30 verschlüsseln. Über diese verschlüsselte Verbindung kann nun von der zentralen Verwaltungseinheit 30 eine Konfiguration des SHCs 22, des Sensors 2 als auch des Aktors 12 erfolgen. Die Konfiguration kann von dem Personalcomputer 32a oder dem Mobiltelefon 32b gesteuert werden. Auch ist es möglich, mittels des Personalcomputers 32a als auch des Mobiltelefons 32b Ereignisse am Sensor 2 zu generieren, um somit bestimmte Aktionen der Aktoren 12 auszulösen. Auch können Status von den Sensoren 2 und den Aktoren 12 so abgefragt werden.

Die Kommunikation zwischen SHC 22, Aktoren 12 und Sensoren 2 ermöglicht zum Einen die Konfiguration der Sensoren 2 und der Aktoren 12 als auch die Steuerung von an den Aktor 12 angeschlossenen elektrischen Verbrauchern mittels der Sensoren 2. Die Aktor-Steuerung wird durch Verknüpfungen zwischen einem Sensor 2 und Aktoren 12 als auch durch Sensor-Parameter und/oder Aktor-Parameter reguliert.

An die verschiedenen Aktoren 12 können verschiedenste elektrische Verbraucher angeschlossen werden. Bei der Konfiguration des Sensors 2 als auch der Aktoren 12 über den SHC 22 kann gegenständlich das Kommunikationsaufkommen mit einem Sensor 2 reduziert werden, so dass der energetisch eigengespeiste Sensor 2 möglichst wenig Energie verbraucht. Die Aktoren 12 können beispielsweise dauerhaft mit Energie versorgt werden, beispielsweise an eine Stromversorgung angeschlossen sein und somit dauerhaft Nachrichten empfangen und aussenden. Auch können die Aktoren 12 derart eingerichtet sein, dass sie dauerhaft Nachrichten empfangen und in Abständen Nachrichten aussenden. Auch können die Aktoren 12 so eingerichtet sein, dass sie dauerhaft Nachrichten empfangen können und nur bei Bedarf Nachrichten aussenden. Die Energieeinsparung muss hauptsächlich an den Sensoren 2 erfolgen, welche energetisch eigengespeist sind. Eine bestmögliche Energieeinsparung lässt sich dadurch erreichen, dass die Kommunikation der Sensoren 2 auf ein Minimum, das heißt nur auf das Nötigste, reduziert wird.

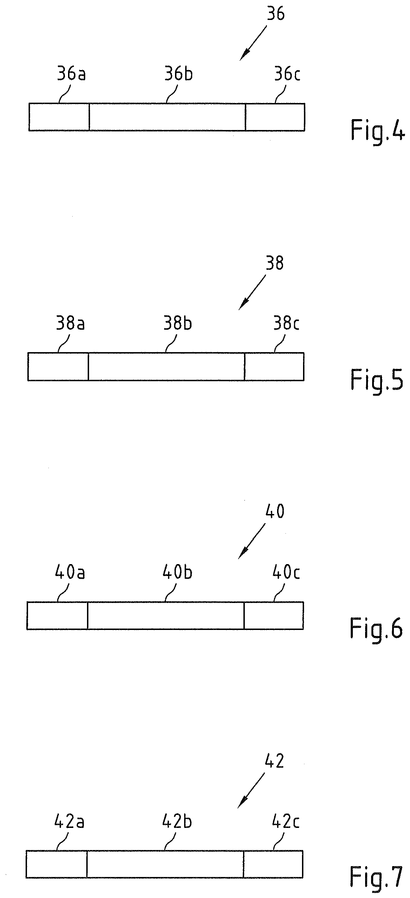

Dieses Minimum kann beispielsweise dadurch erreicht werden, dass der Sensor 2 nur beim Eintritt eines Ereignisses, beispielsweise durch Benutzerinteraktion, eine Kommunikation aufnimmt und Nachrichten aussendet und empfängt. Von dem Sensor ausgesendete und empfangene Nachrichten sind in den Fig. 4 bis 7 dargestellt.

Fig. 4 zeigt eine Datenstruktur einer Konfigurations-Anfrage 36. Die Datenstruktur der Konfigurations-Anfrage 36 besteht aus einem Nachrichtenkopf (Header) 36a, einem Nachrichteninhalt 36b und einer Prüfsumme 36c. In dem Header 36a kann sowohl der Absender als auch der Empfänger der Konfigurations-Anfrage 36 kodiert sein. Weitere, für die Kommunikation notwendige Informationen können ebenfalls in dem Header 36a gespeichert sein. Beispielsweise kann in dem Header 46a die eindeutige Adresse des SHCs 22 als auch die eindeutige Identifikation des Sensors 2 gespeichert sein. In dem Nachrichteninhalt 36b kann kodiert sein, dass es sich bei dieser Nachricht um eine Konfigurations-Anfrage handelt. Die Prüfsumme 36c kann dazu verwendet werden, zu überprüfen, ob der Inhalt einer empfangenen Nachricht fehlerfrei empfangen wurde.

Fig. 5 zeigt eine Datenstruktur einer Konfigurations-Antwort 38. Die Konfigurations-Antwort 38 enthält ebenfalls ein Nachrichtenkopf (Header) 38a, einen Nachrichteninhalt 38b und eine Prüfsumme 38c. Der Header 38a kann dazu verwendet werden, die Konfigurations-Antwort 38 an ein bestimmten Sensor 2 zu adressieren, so dass die Konfigurations-Antwort 38 von dem in dem Header 38a spezifizierten Sensor 2 empfangen werden kann. In dem Nachrichteninhalt 38b können Sensor-Parameter gespeichert sein. Auch ist es möglich, in dem Nachrichteninhalt 38b Informationen zu Verknüpfungen zwischen einem Sensor 2 und einem Aktor 12 zu speichern. Eine solche Verknüpfung kann beispielsweise durch eine Aktor-Identifikation gekennzeichnet sein. Ist eine Aktor-Identifikation in dem Nachrichteninhalt 38b gespeichert, kann der empfangende Sensor 2 entsprechend den ebenfalls in dem Nachrichteninhalt 38b gespeicherten Parametern eine Aktor-Steuerungs-Nachricht konfigurieren und mit der Aktor-Identifikation individualisieren.

Fig. 6 zeigt eine Datenstruktur einer Aktor-Steuerungs-Nachricht 40, die ebenfalls einen Nachrichtenkopf (Header) 40a, einen Nachrichteninhalt 40b und eine Prüfsumme 40c aufweist. Der Header 40a der Aktor-Steuerungs-Nachricht 40 kann eine Aktor-Identifikation enthalten. Mittels dieser Aktor-Identifikation lässt sich ein Aktor 12 eindeutig adressieren, für den die Aktor-Steuerungs-Nachricht 40 gedacht ist. Der entsprechende Aktor 12 kann anhand des Headers 40a somit erkennen, dass die Nachricht für ihn bestimmt ist und die Nachricht entsprechend auswerten. Ebenfalls in dem Header 40a kann die Identifikation des sendenden Sensors 2 gespeichert sein, so dass in der Aktor-Steuerungs-Nachricht 40 sowohl der Adressat als auch der Absender identifizierbar sind. In dem Nachrichteninhalt 40b kann die Art der Steuerung des Aktors 12 kodiert sein. Die Prüfsumme 40c kann zum Überprüfen der übertragenen Aktor-Steuerungs-Nachricht 40 verwendet werden.

Fig. 7 zeigt eine Aktor-Bestätigungs-Nachricht 42, die ebenfalls einen Nachrichtenkopf (Header) 42a, einen Nachrichteninhalt 42b und eine Prüfsumme 42c aufweist. In dem Header 42a kann neben der Aktor-Identifikation des aussendenden Aktors 12 auch die Sensor-Identifikation des Sensors 2 enthalten sein, der die Aktor-Bestätigungs-Nachricht 42 empfangen soll. Anhand des Headers 42a kann somit ein empfangender Sensor 2 entscheiden, ob diese Nachricht für ihn bestimmt ist oder nicht und entsprechend auswerten oder nicht. In dem Nachrichteninhalt 42b kann die von dem Aktor 12 ausgeführte Aktion beschrieben sein, so dass der empfangende Sensor 2 ermitteln kann, ob die gewünschte Aktion ausgeführt wurde. Die Prüfsumme 42c kann zur Überprüfung der übertragenen Nachricht verwendet werden.

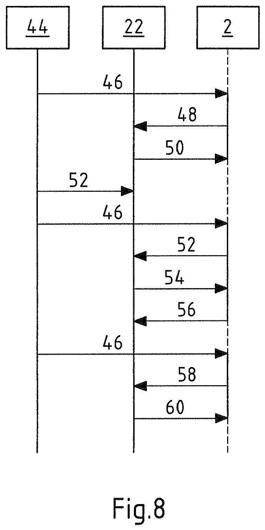

Figs. 8-13 zeigen Nachrichtendiagramme von Nachrichten und Interaktionen zwischen einem Nutzer 44, einem SHC 22, einem Sensor 2 und Aktoren 12 a-c. In diesen Diagrammen sind durchgezogene Linien dahingehend zu verstehen, dass das entsprechende Gerät aktiv (Aktivmodus) ist und gepunktete Linien dahingehend zu verstehen, dass das entsprechende Gerät in inaktiv (Schlafmodus) ist und keine oder nur wenig Energie verbraucht.

In Fig. 8 wird durch einen Nutzer 44 zunächst eine Nutzerinteraktion 46 an dem Sensor 2 ausgelöst und der Sensor 2 aktiviert. Diese Nutzerinteraktion 46 kann beispielsweise das Betätigen eines Tasters 4 sein.

Dieses Ereignis der Benutzerinteraktion wird durch den Prozessor 6 im Sensor 2 detektiert. Der Prozessor 6 überprüft in dem Speicher 10, ob eine Aktor-Steuerungs-Nachricht hinterlegt ist, und somit eine Verknüpfung zwischen dem Sensor 2 und einem Aktor 12 vorhanden ist. Ist keine solche Verknüpfung vorhanden, übermittelt der Sensor 2 über seine Funkschnittstelle 8 an den SHC 22 eine Konfigurations-Anfrage 48. Im SHC 22 wird überprüft, ob eine Verknüpfung zwischen einem Sensor 2 und einem Aktor 12 hinterlegt ist. Ist dies nicht der Fall, so wird eine Fehlernachricht 50 vom SHC 22 an den Sensor 2 übermittelt. Daraufhin wird der Sensor 2 erneut in den Schlafmodus versetzt. Zu einem späteren Zeitpunkt kann von einem Nutzer 44 eine Änderung eines Parameters für einen Sensor 2 in dem SHC 22 mittels einer Nachricht 52 programmiert werden. In dem SHC 22 wird dann die Änderung des Sensor-Parameters abgespeichert. Ein Sensor-Parameter kann eine Regel enthalten, wie ein Sensor 2 auf ein bestimmtes Ereignis reagieren soll.

Bei einer erneuten Benutzerinteraktion 46 wird der Sensor 2 in den Aktivmodus versetzt. Zunächst überprüft der Prozessor 6, ob in dem Speicher 10 eine Verknüpfung hinterlegt ist. Ist dies nicht der Fall, so wird eine Konfigurations-Anfrage 52 an den SHC 22 übermittelt. Der SHC 22 überprüft in seinem Speicher, ob für den entsprechenden Sensor 2 Konfigurationen hinterlegt sind. Im vorliegenden Fall ist ein Sensor-Parameter abgespeichert. Dieser Sensor-Parameter wird im Rahmen einer Konfigurations-Antwort 54 an den Sensor 2 übermittelt. Der Sensor 2 bestätigt in einer Bestätigungsmitteilung 56 dem SHC 22 den korrekten Empfang der Konfigurations-Antwort 54. Der Sensor 2 wird daraufhin wieder in den Schlafmodus versetzt.

Bei einer erneuten Nutzerinteraktion 46 an dem Taster 4 des Sensors 2 wird der Sensor 2 erneut in den Aktivmodus versetzt. Der Prozessor 6 prüft in dem Speicher 10, ob in dem Sensor 2 eine Verknüpfung hinterlegt ist. Ist dies nicht der Fall, so wird eine Konfigurations-Anfrage 58 von dem Sensor 2 an den SHC 22 übermittelt. Der SHC 22 überprüft, ob neue Verknüpfungen oder neue Sensor-Parameter hinterlegt sind. Im gezeigten Beispiel ist dies nicht der Fall, woraufhin der SHC 22 eine Fehlernachricht 60 an den Sensor 2 übermittelt, woraufhin der Sensor 2 erneut in den Schlafmodus versetzt wird.

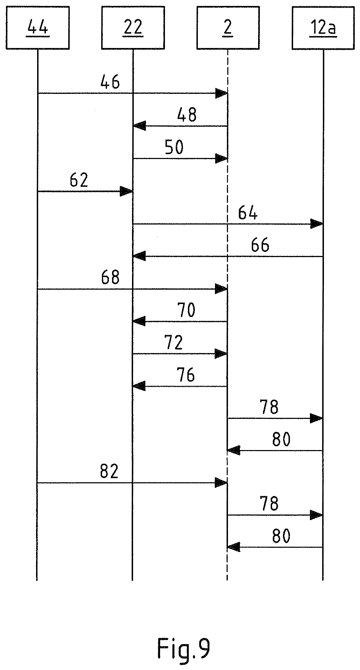

Fig. 9 zeigt ein Nachrichtendiagramm, bei dem ein Aktor konfiguriert wird, derart, dass der Sensor 2 mit dem Aktor 12a verknüpft wird. Die Nachrichten 46-50 entsprechen dem in Fig. 8 beschriebenen.

In einer Nachricht 62 konfiguriert ein Benutzer 44 den SHC 22 derart, dass eine Verknüpfung zwischen dem Sensor 2 und dem Aktor 12a erstellt wird. Diese Verknüpfung bedeutet, dass der Sensor 2 an den Aktor 12a Aktor-Steuerungs-Nachrichten übermitteln kann. Nachdem die Verknüpfung in dem SHC 22 konfiguriert wurde, wird eine Konfigurations-Nachricht 64 an den Aktor 12a von dem SHC 22 übermittelt. In dieser Nachricht 64 ist zumindest die Information darüber enthalten, dass der Aktor 12a von dem Sensor 2 Nachrichten empfangen soll. Der Aktor 12a bestätigt den korrekten Empfang der Nachricht 64 in einer Bestätigungsnachricht 66. Während der Nachrichten 62, 64, und 66 ist der Sensor 2 im Schlafmodus.

Bei einer erneuten Benutzerinteraktion 68, beispielsweise durch Drücken des Tasters 4 auf dem Sensor 2, wird der Sensor 2 in den Aktivmodus versetzt. Der Prozessor 6 in dem Sensor 2 überprüft in dem Speicher 10, ob eine Verknüpfung hinterlegt ist. Ist dies nicht der Fall, so wird eine Konfigurations-Anfrage 70 an den SHC 22 gesendet. Der SHC 22 überprüft die empfangene Konfigurations-Anfrage 70 dahingehend, ob für den anfragenden Sensor 2 eine Verknüpfung gespeichert ist. Im vorliegenden Fall ist dies der Fall.

Die gespeicherte Verknüpfung wird im Rahmen einer Konfigurations-Antwort 72 an den Sensor 2 übertragen. Hierbei wird von dem SHC 22 an den Sensor 2 die Information übertragen, dass der Sensor 2 eine Aktor-Steuerungs-Nachricht an den Aktor 12 übermitteln kann, sobald eine Nutzerinteraktion erfolgt. Mit dieser Information kann in dem Sensor 2 eine Aktor-Steuerungs-Nachricht konfiguriert werden. In der Konfigurations-Antwort 72 ist eine Aktor-Identifikation hinterlegt, so dass die Aktor-Steuerungs-Nachricht auch für den Aktor 12a individualisiert werden kann.

Den Empfang der Konfigurations-Antwort 72 bestätigt der Sensor 2 mit einer Bestätigungsnachricht 76 an den SHC 22. Ohne auf eine erneute Nutzerinteraktion 68 zu warten, wird unmittelbar die durch die Verknüpfung bestimmte Aktor-Steuerungs-Nachricht 78 an den Aktor 12a von dem Sensor 2 übermittelt. Der Aktor 12a bestätigt den Empfang der Aktor-Steuerungs-Nachricht mit einer Bestätigungsnachricht 80. Zusätzlich führt der Aktor 12a die Aktion aus, die in der Aktor-Steuerungs-Nachricht kodiert ist.

Nach Empfang der Bestätigungsnachricht 80 wird der Sensor 2 wieder in den Schlafmodus versetzt. Erst bei einer erneuten Nutzerinteraktion 82 wird der Sensor 2 aktiviert. In diesem Fall ist in dem Sensor bereits eine Verknüpfung gespeichert, die, wie oben beschrieben, konfiguriert wurde. Da eine Verknüpfung bereits gespeichert wird, wird keine weitere Konfigurations-Anfrage an den SHC 22 von dem Sensor 2 übermittelt, sondern unmittelbar die Aktor-Steuerungs-Nachricht 78 an den Aktor 12a erneut gesendet und auf eine Aktor-Bestätigungs-Nachricht 80 gewartet, bei deren Empfang der Sensor 2 erneut in den Schlafmodus versetzt wird.

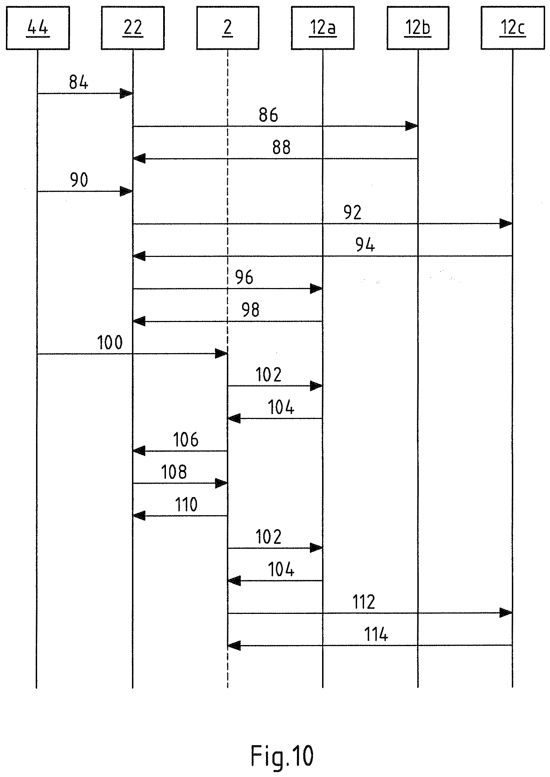

Das Verändern der Sensor-Parameter als auch der Verknüpfungen in dem Sensor 2 ist, sobald zwei Aktoren 12a, 12b für einen Sensor 2 konfiguriert sind, dadurch möglich, dass die Veränderung nicht direkt von dem SHC 22 an den Sensor 2 übermittelt wird, sondern erst ausgelöst durch einen der Aktoren 12a, 12b, die von dem Sensor 2 bei einer Benutzerinteraktion angesprochen werden. Ein solches Szenario ist beispielhaft in Fig. 10 dargestellt.

In Fig. 10 sind Aktoren 12a, 12b mit dem Sensor 2 verknüpft, derart, dass in dem Speicher des Sensors 2 Sensor-Steuerungs-Nachrichten für die Sensoren 12a, 12b hinterlegt sind. Ausgehend von diesem Setup wird in der Fig. 10 durch einen Benutzer dem SHC 22 mitgeteilt, dass eine Verknüpfung zwischen Sensor 2 und Aktor 12b gelöscht werden soll. Hierzu übermittelt der Benutzer eine Nachricht 84 an den SHC 22. Das Entfernen der Verknüpfung betrifft im vorliegenden Fall die Verknüpfung zwischen dem Sensor 2 und dem Aktor 12b, dass heißt, der Sensor 2 soll zukünftig den Aktor 12b nicht mehr ansteuern.

Während Sensor 2 im Schlafmodus verbleibt, wird von dem SHC 22 eine Verknüpfungs-Änderungs-Mitteilung 86 an den Aktor 12b übermittelt. In dem Aktor 12b wird das Entfernen der Verknüpfung gespeichert und eine Bestätigungsnachricht 88 an den SHC 22 übermittelt.

Anschließend wird durch den Benutzer 44 eine Nachricht 90 an den SHC 22 übermittelt, mit der neue eine Verknüpfung zwischen dem Sensor 2 und dem Aktor 12c etabliert werden soll. Da eine solche Verknüpfung in dem SHC 22 noch nicht gespeichert ist, sendet der SHC 22 eine Verknüpfungs-Änderungs-Mitteilung 92 an den Aktor 12c, der daraufhin in seinem Speicher die Verknüpfung speichert und mit einer Bestätigungsnachricht 94 den Empfang bestätigt.

Außerdem übermittelt der SHC 22 eine Verknüpfungs-Änderungs-Nachricht 96 an den Aktor 12a. In dieser Aktor-Änderungs-Nachricht ist zumindest die Information enthalten, dass eine neue Verknüpfung zwischen dem Sensor 2 und dem Aktor 12c hinzugefügt wurde. Auch enthalten sein kann die Information, dass die Verknüpfung zwischen dem Sensor 2 und dem Aktor 12b entfernt wurde. Außerdem enthält diese Nachricht die Information, dass diese Änderungen durch den Aktor 12a dem Sensor 2 bei der nächsten Gelegenheit mitgeteilt werden. Die Nachricht 96 wird durch eine Bestätigungsnachricht 98 gegenüber dem SHC 22 bestätigt.

Bei einer Benutzerinteraktion 100 wird der Sensor 2 in den Aktivmodus versetzt. Der Sensor 2 hat bis dahin keine Kenntnis von den Änderungen die mit den Mitteilungen 86, 92 und 96 den Aktoren 12a, 12b und 12c mitgeteilt wurden. Der Sensor 2 übermittelt die ihm bis dahin bekannte Aktor-Steuerungs-Nachricht 102 an den ersten Aktor 12a. Der Aktor 12a antwortet mit einer Bestätigungsnachricht 104, in der eine Verknüpfungs-Änderungs-Mitteilung enthalten ist. In der Verknüpfungs-Änderungs-Mitteilung ist sowohl Informationen enthalten, dass die Verknüpfung zu dem Aktor 12b gelöscht wurde, als auch dass eine neue Verknüpfung zu dem Sensor 12c hinzugefügt wurde. Auch kann nur die Information enthalten sein, dass sich etwas an Verknüpfungen des Sensors 2 geändert hat.

Auf diese Information hin, die im Rahmen einer sogenannten Delegation vom Aktor 12a dem Sensor 2 mitgeteilt wurde, wird von dem Sensor 2 eine Konfigurations-Anfrage 106 an den SHC 22 übermittelt. Der SHC 22 kommuniziert in einer Konfigurations-Antwort 108 gegenüber dem Sensor 2 die Inhalte der geänderten Verknüpfungen, welche der Sensor 2 gegenüber dem SHC 22 mit einer Nachricht 110 bestätigt und gleichsam für eine Umprogrammierung der Parameter und Verknüpfungen verwenden verwendet.

Nun kann optional eine erneute Aktor-Steuerungs-Nachricht 102 an den Aktor 12a von dem Sensor 2 übermittelt werden, welche erneut mit einer Nachricht 104 bestätigt wird. Dieser Schritt kann jedoch entfallen, da die Aktor-Steuerungs-Nachricht 102 bereit zuvor an den Aktor 12a übermittelt wurde.

Zusätzlich wird eine Aktor-Steuerungs-Nachricht 112 an den Aktor 12c übermittelt, da dieser neu mit dem Sensor 2 verknüpft wurde. Der Aktor 12c bestätigt dies mit einer Bestätigungsnachricht 114. Eine Aktor-Steuerungs-Nachricht an den Aktor 12b entfällt, da diese Verknüpfung gelöscht wurde.

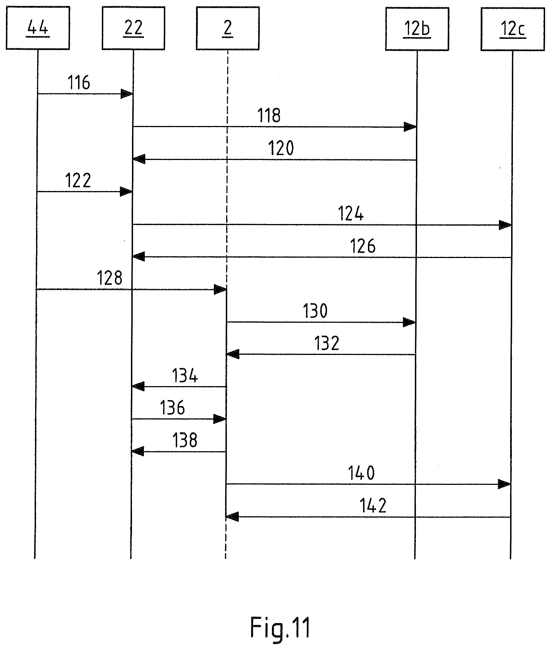

Es kann der Fall auftreten, dass eine Verknüpfung mit allen Aktoren 12 gelöscht wird, so dass der Sensor 2 mit den ihm bekannten Aktoren 12 nicht mehr verknüpft ist und eventuell nur noch mit neuen Aktoren 12 verknüpft ist. Eine solche Situation ist in der Fig. 11 dargestellt.

In der Fig. 11 ist eine Verknüpfung zwischen dem Sensor 2 und dem Aktor 12b bereits hergestellt und eine Verknüpfung zwischen dem Sensor 2 und dem Aktor 12c besteht nicht. Mit einer Steuerungsnachricht 116 weist ein Benutzer 44 den SHC 22 an, die Verknüpfung zwischen dem Sensor 2 und dem Aktor 12b zu löschen. Der SHC 22 übermittelt daraufhin eine Verknüpfungs-Änderungs-Mitteilung 118 an den Aktor 12b, der diese Nachricht mit einer Bestätigungsnachricht 120 bestätigt. Außerdem wird in dem Aktor 12b die Verknüpfung zum Sensor 2 gelöscht. Der Aktor 12b reagiert daraufhin nicht mehr auf Aktor-Steuerungs-Nachrichten vom Sensor 2.

Anschließend erstellt der Benutzer durch eine Nachricht 122 eine neue Verknüpfung zwischen dem Sensor 2 und dem Aktor 12c. Diese neue Verknüpfung wird in dem SHC 22 ebenfalls gespeichert und durch eine Verknüpfungs-Änderungs-Mitteilung 124 dem Aktor 12c mitgeteilt, der diese Nachricht in einer Mitteilung 126 bestätigt und eine entsprechende Verknüpfung abspeichert, so dass der Aktor 12c daraufhin auf Aktor-Steuerungs-Nachrichten des Sensors 2 reagiert. Während des gesamten Vorgangs ist der Sensor 2 im Schlafmodus.

Löst der Benutzer nun durch eine Benutzerinteraktion 128 den Sensor 2 aus und versetzt ihn in den Aktivmodus, so geht der Sensor 2 zunächst davon aus, dass die bisher bestehende Verknüpfung gleichgeblieben ist. Der Sensor 2 erstellt aus diesem Grunde eine Aktor-Steuerungs-Nachricht 130, die an den Aktor 12b übermittelt wird. Da der Aktor 12b nicht mehr mit dem Sensor 2 verknüpft ist, sendet der Aktor 12b eine Fehlernachricht 132 an den Sensor 2. Auch ist es möglich, dass auf die Fehlernachricht verzichtet wird. Anstatt dessen reagiert der Aktor 12b auf die Aktor-Steuerungs-Nachricht nicht. Der Sensor 2 kann eine gewisse Zeit auf eine Bestätigungsnachricht warten (Time-Out) und falls diese nicht eintrifft, mit den weiteren Schritten 134-142 fortfahren.

Beim Ausbleiben der Bestätigungsnachricht oder beim Empfangen einer Fehlernachricht 132 übermittelt der Sensor 2 eine Konfigurations-Anfrage 134 an den SHC 22. Der SHC 22 übermittelt dann an den Sensor 2 eine Verknüpfungs-Änderungs-Mitteilung im Rahmen einer Konfigurations-Antwort 136. Diese Verknüpfungs-Änderungs-Mitteilungen enthält Informationen zu den geänderten Verknüpfungen, die zuvor vom Benutzer konfiguriert und vom SHC 22 den Aktoren 12b, c kommuniziert wurden. Der Sensor 2 bestätigt den Empfang in einer Bestätigungsnachricht 138.

Zusätzlich werden in dem Sensor 2 mittels des Prozessors 6 in dem Speicher 10 die geänderten Verknüpfungen gespeichert. Unmittelbar im Anschluss, das heißt ohne weitere Benutzerinteraktion, übermittelt der Sensor 2 eine Aktor-Steuerungs-Nachricht 140 an den Aktor 12c, welcher zuvor mit dem Sensor 2 verknüpft wurde, entsprechend der gespeicherten, geänderten Verknüpfung. Der Aktor 12c bestätigt dies mit einer Mitteilung 142 und führt die ihm zugewiesenen Schritte der Steuerung des elektrischen Verbrauchers aus.

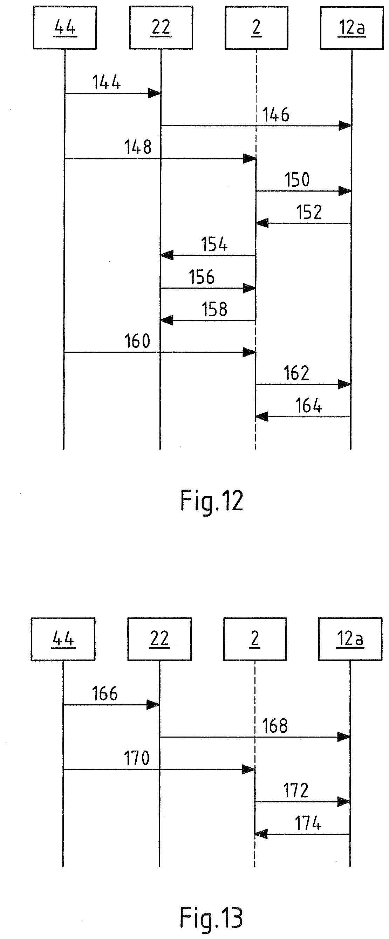

Neben der Änderung von Verknüpfungen ist es auch möglich, dass Sensor-Parameter verändert werden. Die Mitteilung an den Sensor, dass seine Parameter verändert wurden, kann ebenfalls durch einen Aktor erfolgen, wie dies in Fig. 12 dargestellt ist.

Ein Benutzer 44 kann den SHC 22 derart konfigurieren 144, dass Sensor-Parameter verändert werden. Die Veränderung der Sensor-Parameter und/oder die Information dass eine Veränderung an den Sensor-Parameter vorgenommen wurde werden in einer Sensor-Parameter-Änderungsmitteilung 146 an den Aktor 12a übermittelt. Während dieser Übermittlung ist der Sensor 12 im Schlafmodus.

Erst bei einer Benutzerinteraktion 148 wacht der Sensor 2 auf und überträgt seine gespeicherte Aktor-Steuerungs-Nachricht 150 an den Aktor 12a. Der Aktor 12a führt die entsprechende Aktion aus und bestätigt dies in einer Aktor-Bestätigungs-Nachricht 152 in der die Parameter-Änderungs-Mitteilung enthalten ist an den Sensor 2. In dieser Aktor-Bestätigungs-Nachricht 152 ist somit zusätzlich die Information enthalten, dass sich und/oder wie sich Sensor-Parameter verändert haben. Somit ist in der Aktor-Bestätigungs-Nachricht 152 eine Delegationsinformation enthalten.

Beim Empfang einer solchen Aktor-Bestätigungs-Nachricht 152 kann der Sensor 2 eine Konfigurations-Anfrage 154 an den SHC 22 senden, welcher mit einer Konfigurations-Antwort 156 die geänderten Sensor-Parameter dem Sensor 2 mitteilt. Der Sensor 2 bestätigt den Empfang mit einer Mitteilung 158. Daraufhin wird der Sensor 2 in den Schlafmodus versetzt.

Bei einer erneuten Benutzerinteraktion 160 führt der Sensor 2 entsprechend der geänderten Sensor-Parameter das Aussenden der Aktor-Steuerungs-Nachricht 162 aus, welche durch den Aktor 12a mit einer Aktor-Bestätigungs-Nachricht 164 bestätigt wird, woraufhin der Sensor 2 erneut in den Schlafmodus versetzt wird.

Neben der Änderung von Sensor-Parametern ist es auch möglich, Aktor-Parameter zu verändern. Die Veränderung der Aktor-Parameter kann völlig unabhängig von dem Sensor 2 erfolgen. Dies ist in Fig. 13 dargestellt.

In Fig. 13 wird durch ein Benutzer 44 an dem SHC 22 durch eine Nachricht 166 eine Änderung eines Aktor-Parameters erzeugt. Die Änderung des Aktor-Parameters wird von dem SHC 22 durch eine Parameter-Änderungs-Mitteilung 168 an den Aktor 12a übermittelt. Bei einer Benutzerinteraktion 170 an dem Sensor 2 wird dieser aus dem Schlafmodus in den Aktivmodus versetzt und der Sensor 2 übermittelt eine Aktor-Steuerungs-Nachricht 172 an den Aktor 12a, der den korrekten Empfang mit einer Aktor-Bestätigungs-Nachricht 174 bestätigt und die entsprechenden Aktionen abhängig von den geänderten Aktor-Parametern ausführt.

Mittels des gezeigten Verfahrens ist es möglich, einen Sensor in einem vorzugsweise funkbasierten Heimautomatisierungssystem besonders stromsparend zu betreiben. Änderungen an der Sensorkonfiguration als auch Verknüpfung zwischen einem Sensor und einem Aktor können dem Sensor dann mitgeteilt werden, wenn der Sensor ohnehin durch eine Nutzerinteraktion in einen Aktivmodus versetzt wurde. Hat der Sensor dann ohnehin mit Aktoren kommuniziert, können die Änderungen der Parameter als auch der Verknüpfungen dem Sensor durch die Aktoren mitgeteilt werden und eventuell eine Rückfrage bei einem SHC 22 ausgelöst werden. Eine regelmäßige Kommunikation des Sensors mit Aktoren bzw. einem zentralen Steuergerät ist nicht notwendig.

## Patentansprüche

1. Sensor (2) zur Steuerung eines Heimautomatisierungssystems mit
- einem Eingang (4) eingerichtet zum Detektieren von Ereignissen (46), und
- einem Prozessor (6) eingerichtet zum Auswerten von an dem Eingang (4) detektierten Ereignissen (46) und zum Steuern einer Kommunikationsschnittstelle (8), derart, dass mittels einer von der Kommunikationsschnittstelle (8) ausgesendeten Aktor-Steuerungs-Nachricht (102) ein Aktor (12) ansteuerbar ist,
- wobei der Prozessor (6) über die Kommunikationsschnittstelle (8) in Reaktion auf ein detektiertes Ereignis (46) zumindest die Aktor-Steuerungs-Nachricht (102) an den Aktor (12, 12a, 12b, 12c) versendet,
**dadurch gekennzeichnet,**
- **dass**, falls keine Aktor-Steuerungs-Nachricht (102) für den Aktor (12, 12a, 12b, 12c) in dem Prozessor (6) konfiguriert ist, der Prozessor (6) in Reaktion auf das detektierte Ereignis (46) über die Kommunikationsschnittstelle (8) eine Konfigurations-Anfrage (48, 52) aussendet und eine über die Kommunikationsschnittstelle empfangene Konfigurations-Antwort (54) auswertet.

2. Sensor nach Anspruch 1, **dadurch gekennzeichnet, dass** der Prozessor (6) aus der Konfigurations-Antwort (54) zumindest eine Aktor-Identifikation ermittelt und mit Hilfe der ermittelten Aktor-Identifikation die Aktor-Steuerungs-Nachricht (102) derart individualisiert, dass diese von dem der Aktor-Identifikation zugeordneten Aktor empfangbar und auswertbar ist.

3. Sensor nach Anspruch 1 oder 2, **dadurch gekennzeichnet, dass** der Prozessor (6) aus der Konfigurations-Antwort zumindest (54) einen Sensor-Parameter ermittelt und mit Hilfe des ermittelten Sensor-Parameters zumindest eine Aktor-Steuerungs-Nachricht (102) konfigurierbar ist.

4. Sensor nach einem der Ansprüche 1 bis 3, **dadurch gekennzeichnet, dass** er energetisch eigengespeist ist.

5. Sensor nach einem der Ansprüche 1 bis 4, **dadurch gekennzeichnet, dass** der Prozessor den Empfang einer Aktor-Bestätigungs-Nachricht in Reaktion auf das Aussenden einer Aktor-Steuerungs-Nachricht an der Kommunikationsschnittstelle überwacht.

6. Sensor nach Anspruch 5, **dadurch gekennzeichnet, dass** der Prozessor (6) bei einem Ausbleiben der Aktor-Bestätigungs-Nachricht (104) und/oder bei einem Empfang einer Aktor-Fehler-Nachricht über die Kommunikationsschnittstelle eine Konfigurations-Anfrage (106) aussendet.

7. Sensor nach Anspruch 5, **dadurch gekennzeichnet, dass** der Prozessor (6) eine empfangene Aktor-Bestätigungs-Nachricht (104) auswertet und aus der Aktor-Bestätigungs-Nachricht (104) eine Verknüpfungs-Änderungsmitteilung ermittelt und/oder dass der Prozessor (6) aus der Verknüpfungs-Änderungsmitteilung zumindest ein Sensorparameter ermittelt und mit Hilfe des ermittelten Sensor-Parameters zumindest eine Aktor-Steuerungs-Nachricht (102) konfigurierbar ist.

8. Sensor nach Anspruch 7, **dadurch gekennzeichnet, dass** der Prozessor (6) als Reaktion auf eine Verknüpfungs-Änderungsmitteilung über die Kommunikationsschnittstelle eine Konfigurations-Anfrage (106) aussendet.

9. Sensor nach Anspruch 5, **dadurch gekennzeichnet, dass** der Prozessor (6) als Reaktion auf eine Sensor-Parameter-Änderungsmitteilung über die Kommunikationsschnittstelle eine Konfigurations-Anfrage (106) aussendet.

10. Sensor nach Anspruch 9, **dadurch gekennzeichnet, dass** der Prozessor aus der Sensor-Parameter-Änderungsmitteilung zumindest einen Sensor-Parameter ermittelt und mit Hilfe des ermittelten Sensor-Parameters zumindest eine Aktor-Steuerungs-Nachricht (102) konfigurierbar ist.

11. Sensor nach einem der Ansprüche 1 bis 10, **dadurch gekennzeichnet, dass** der Prozessor (6) die Konfigurations-Anfrage (106) derart individualisiert, dass diese von genau einem zentralen Server (22) empfangen und ausgewertet wird.

12. Sensor nach einem der Ansprüche 1 bis 11, **dadurch gekennzeichnet, dass** die über die Kommunikationsschnittstelle empfangene Konfigurations-Antwort (108) von genau einem zentralen Server (22) stammt.

13. Verfahren zur Steuerung eines Heimautomatisierungssystems mit den Schritten
- sensorseitiges Detektieren eines Ereignisses,
- sensorseitiges Aussenden einer Aktor-Steuerungs-Nachricht (102) zum Ansteuern eines Aktors (12) in Reaktion auf das detektierte Ereignis (46),
**dadurch gekennzeichnet,**
- **dass**, falls keine Aktor-Steuerungs-Nachricht (102) für den Aktor (12, 12a, 12b, 12c) konfiguriert ist, in Reaktion auf das detektierte Ereignis (46) über die Kommunikationsschnittstelle (8) eine Konfigurations-Anfrage (48, 52) ausgesendet wird und eine über die Kommunikationsschnittstelle empfangene Konfigurations-Antwort (54) ausgewertet wird.

## Claims

1. Sensor (2) for controlling a home automation system having
- an input (4) configured to detect events (46) and
- a processor (6) configured to evaluate events (46) detected at the input (4) and to control a communications interface (8) such that an actuator (12) is actuatable by means of an actuator control message (102) emitted by the communications interface (8),
- wherein the processor (6) sends at least the actuator control message (102) to the actuator (12, 12a, 12b, 12c) via the communications interface (8) in response to a detected event (46),
**characterised in that**
- if no actuator control message (102) is configured for the actuator (12, 12a, 12b, 12c) in the processor (6), the processor (6) emits a configuration request (48, 52) in response to the detected event (46) via the communications interface (8) and evaluates a configuration response (54) received via the communications interface.

2. Sensor according to claim 1, **characterised in that** the processor (6) determines at least one actuator identification from the configuration response (54) and customises the actuator control message (102) with the aid of the determined actuator identification such that it is receivable and evaluatable by the actuator assigned to the actuator identification.

3. Sensor according to claim 1 or 2, **characterised in that** the processor (6) determines at least one sensor parameter from the configuration response (54) and at least one actuator control message (102) is configurable with the aid of the determined sensor parameter.

4. Sensor according to any one of claims 1 to 3, **characterised in that** it is self-powered with energy.

5. Sensor according to any one of claims 1 to 4, **characterised in that** the processor monitors the receipt of an actuator confirmation message at the communication interface in response to the emission of an actuator control message.

6. Sensor according to claim 5, **characterised in that** the processor (6) emits a configuration request (106) via the communications interface in the absence of the actuator confirmation message (104) and/or upon receipt of an actuator error message.

7. Sensor according to claim 5, **characterised in that** the processor (6) evaluates a received actuator confirmation message (104) and determines a linking change notification and/or **in that** the processor (6) determines at least one sensor parameter from the linking change notification and at least one actuator control message (102) is configurable with the aid of the determined sensor parameter.

8. Sensor according to claim 7, **characterised in that** the processor (6) emits a configuration request (106) via the communications interface as a response to a linking change notification.

9. Sensor according to claim 5, **characterised in that** the processor (6) emits a configuration request (106) via the communication interface as a response to a sensor parameter change notification.

10. Sensor according to claim 9, **characterised in that** the processor determines at least one sensor parameter from the sensor parameter change notification and at least one actuator control message (102) is configurable with the aid of the determined sensor parameter.

11. Sensor according to any one of claims 1 to 10, **characterised in that** the processor (6) customises the configuration request (106) such that it is received and evaluated by precisely one central server (22).

12. Sensor according to any one of claims 1 to 11, **characterised in that** the configuration response (108) received via the communications interface originates from precisely one central server (22).

13. Method for controlling a home automation system having the steps:
- detecting an event at the sensor,
- emitting an actuator control message (102) at the sensor to actuate an actuator (12) in response to the detected event (46), **characterised in**
- **that** if no actuator control message (102) is configured for the actuator (12, 12a, 12b, 12c), a configuration request (48, 52) is emitted via the communications interface (8) in response to the detected event (46) and a configuration response (54) received via the communications interface is evaluated.

## Revendications

1. Capteur (2) pour la commande d'un système domotique comprenant
- une entrée (4) agencée pour servir à la détection d'événements (46), et
- un processeur (6) agencé pour servir à l'analyse d'événements (46) détectés au niveau de l'entrée (4) et pour servir à la commande d'une interface de communication (8), de manière telle qu'un actionneur (12) puisse être piloté au moyen d'un message de commande d'actionneur (102) envoyé par l'interface de communication (8),
- où le processeur (6) envoie à l'actionneur (12, 12a, 12b, 12c) au moins le message de commande d'actionneur (102), ledit message étant envoyé via l'interface de communication (8), en réaction à un événement détecté (46),
**caractérisé**
- **en ce que**, au cas où aucun message de commande d'actionneur (102) pour l'actionneur (12, 12a, 12b, 12c) n'est configuré dans le processeur (6), le processeur (6) envoie une demande de configuration (48, 52) via l'interface de communication (8), en réaction à l'événement détecté (46), et analyse une réponse de configuration (54) reçue via l'interface de communication.

2. Capteur selon la revendication 1, **caractérisé en ce que** le processeur (6) détermine au moins une identification de l'actionneur à partir de la réponse de configuration (54) et, à l'aide de l'identification de l'actionneur ayant été déterminée, individualise le message de commande d'actionneur (102) de manière telle, que ledit message puisse être reçu et analysé par l'actionneur associé à l'identification de l'actionneur.

3. Capteur selon la revendication 1 ou 2, **caractérisé en ce que** le processeur (6) détermine au moins un paramètre de capteur à partir de la réponse de configuration (54), et au moins un message de commande d'actionneur (102) peut être configuré à l'aide du paramètre de capteur déterminé.

4. Capteur selon l'une quelconque des revendications 1 à 3, **caractérisé en ce que** ledit capteur a, énergétiquement, sa propre alimentation.

5. Capteur selon l'une quelconque des revendications 1 à 4, **caractérisé en ce que** le processeur surveille la réception d'un message d'accusé de réception d'actionneur, en réaction à l'envoi d'un message de commande d'actionneur à l'interface de communication.

6. Capteur selon la revendication 5, **caractérisé en ce que** le processeur (6), dans le cas d'une absence du message d'accusé de réception d'actionneur (104) et / ou dans le cas d'une réception d'un message d'erreur de l'actionneur, envoie une demande de configuration (106) via l'interface de communication.

7. Capteur selon la revendication 5, **caractérisé en ce que** le processeur (6) analyse un message d'accusé de réception d'actionneur (104) ayant été reçu et, à partir du message d'accusé de réception d'actionneur (104), détermine un avis de modification de connexion et / ou **en ce que** le processeur (6) détermine au moins un paramètre de capteur à partir de l'avis de modification de connexion, et au moins un message de commande d'actionneur (102) peut être configuré à l'aide du paramètre de capteur déterminé.

8. Capteur selon la revendication 7, **caractérisé en ce que** le processeur (6) envoie une demande de configuration (106) via l'interface de communication, en réaction à un avis de modification de connexion.

9. Capteur selon la revendication 5, **caractérisé en ce que** le processeur (6) envoie une demande de configuration (106) via l'interface de communication, en réaction à un avis de modification de paramètre de capteur.

10. Capteur selon la revendication 9, **caractérisé en ce que** le processeur détermine au moins un paramètre de capteur à partir de l'avis de modification de paramètre de capteur, et au moins un message de commande d'actionneur (102) peut être configuré à l'aide du paramètre de capteur déterminé.

11. Capteur selon l'une quelconque des revendications 1 à 10, **caractérisé en ce que** le processeur (6) individualise la demande de configuration (106), de manière telle que ladite demande de configuration soit reçue et analysée précisément par un serveur central (22).

12. Capteur selon l'une quelconque des revendications 1 à 11, **caractérisé en ce que** la réponse de configuration (108) reçue via l'interface de communication provient précisément d'un serveur central (22).

13. Procédé de commande d'un système domotique comprenant les étapes telles que
- la détection, côté capteur, d'un événement,
- l'envoi, côté capteur, d'un message de commande d'actionneur (102) servant au pilotage d'un actionneur (12), en réaction à l'événement détecté (46),
**caractérisé**
- **en ce que**, au cas où aucun message de commande d'actionneur (102) n'est configuré pour l'actionneur (12, 12a, 12b, 12c), une demande de configuration (48, 52) est envoyée via l'interface de communication (8), en réaction à l'événement détecté (46), et une réponse de configuration (54) reçue via l'interface de communication est analysée.
